# FASCICULE DE BREVET EUROPEEN

(11) **EP 0 598 958 B1**
(45) Date de publication et mention de la délivrance du brevet: **03.09.1997**
(21) Numéro de dépôt: 92403184.2
(22) Date de dépôt: 26.11.1992
(51) Int. Cl.: A61G 7/012, A61G 7/002, G01G 19/44

(54) **Lit médicalisé modulaire**
Medizinisches Bett in Modulform
Modular medical bed

(43) Date de publication de la demande: 01.06.1994
(73) Titulaire: Medicalux, 86500 Montmorillon (FR)
(72) Inventeur: Medicalux, 86500 Montmorillon (FR)
(74) Mandataire: Thévenet, Jean-Bruno

(56) Documents cités:
- EP-A- 0 322 994
- DE-U- 9 202 382
- FR-A- 2 183 354
- FR-A- 2 676 643
- US-A- 4 227 269
- US-A- 4 807 558

## Description

La présente invention concerne un lit médicalisé modulaire pouvant être utilisé notamment dans des centres hospitaliers, des maisons de retraite de même que chez des particuliers dans le cadre d'une hospitalisation à domicile.

Les lits médicalisés présentent la particularité d'être équipés de moyens de levage permettant d'élever et abaisser le sommier, ainsi que généralement de moyens permettant d'incliner le sommier par rapport à un plan horizontal, en conférant des mouvements de proclive-déclive, ou de moyens permettant de relever sélectivement la partie antérieure de support du buste. Les lits médicalisés sont en outre généralement montés sur des roues facilitant leur déplacement.

Les lits médicalisés connus sont généralement lourds, encombrants et coûteux à fabriquer du fait qu'ils présentent des mécanismes complexes agissant par des systèmes de bielles ou leviers coudés à la fois à la tête et au pied du lit pour provoquer les divers mouvements souhaités de montée-descente ou de bascule.

Par ailleurs, il est souvent souhaitable de pouvoir effectuer des contrôles fréquents de l'état du patient en procédant à des vérifications régulières du poids de celui-ci.

Pour cela, une méthode courante consiste à utiliser un lève-malade, c'est-à-dire de suspendre par des sangles le malade à un peson. Cette méthode est naturellement très primitive et peu souhaitable pour les patients qui sont les plus affaiblis ou ceux dont les blessures demandent qu'ils soient soumis à un minimum de manipulations.

Une autre méthode consiste à effectuer une pesée du lit du malade. Dans la mesure où le bâti du lit et son équipement sont toujours les mêmes, après une première mesure du lit sans patient, il est possible de faire des mesures régulières qui correspondent à l'évolution du poids du malade et permettent de tracer une courbe de poids. En pratique, la pesée du lit s'effectue par l'intermédiaire de quatre capteurs d'effort associés à chacune des roues du lit. La localisation des capteurs et des circuits électroniques correspondants au voisinage immédiat du sol n'est pas très satisfaisante dans la mesure où ceux-ci peuvent être facilement soumis à une certaine humidité. De plus, l'utilisation de plusieurs capteurs nécessite la mise en oeuvre de circuits supplémentaires effectuant une moyenne des informations fournies par les différents capteurs. C'est pourquoi les systèmes de pesée appliqués aux lits médicalisés classiques ne présentent pas toute la commodité d'emploi et de réalisation souhaitable.

Les malades doivent par ailleurs souvent faire l'objet de contrôles radiologiques de différentes parties du corps. Les lits classiques, dans lesquels le sommier repose sur un cadre métallique, ne permettent pas de prendre facilement des clichés radiologiques du malade sans que celui-ci soit sorti de son lit pour être placé dans un poste de radiographie.

On connaît également par le document FR-A-2 183 354 un lit d'hôpital avec un piètement en forme de U et, par le document EP-A-322 994, un lit d'hôpital équipé d'un vérin de levage, et de panneaux de buste, d'assise et de pied.

La présente invention vise à remédier aux inconvénients précités et notamment à réaliser un lit médicalisé modulaire qui soit facile à réaliser dans des versions différentes à partir d'une structure de base commune.

L'invention vise encore à réaliser un lit médicalisé dont la conception mécanique soit relativement simple et qui présente une masse et des dimensions, notamment en largeur, plus réduites que celles des lits médicalisés classiques.

L'invention a encore pour objet un lit médicalisé dont le commande des différents mouvements de montée-descente ou d'inclinaison soit réalisée de façon simple et avec un maximum de sécurité et de commodité pour les utilisateurs.

Un autre objet de l'invention consiste à permettre d'effectuer de façon commode et fiable la pesée du lit, et donc du malade, sans gêne pour ce dernier, grâce à un module de pesée unique amovible facilement adaptable à tous les lits conformes à l'invention.

L'invention a encore pour but de permettre la prise de clichés radiographiques d'un malade sans sortir celui-ci de son lit, grâce à la possibilité d'insertion d'un module de radiographie amovible, dans le lit conforme à l'invention, pour réaliser notamment des radiographies du buste ou de l'abdomen.

Ces buts sont atteints, conformément à l'invention, grâce à un lit médicalisé modulaire, comprenant :
a) un piétement en forme de U comprenant deux longerons latéraux reliant chacun des montants de support de pied avant et arrière, au moins une traverse inférieure de tête entretoisant les deux longerons latéraux entre les montants de support de pied avant et au moins une traverse supérieure de tête montée sur le piétement à une hauteur prédéterminée fixe au-dessus de la traverse inférieure de tête,
b) un support principal en porte-à-faux comprenant une poutre principale de grande section disposée longitudinalement et axialement, un montant vertical inférieur qui se projette vers le bas à partir de la poutre principale, en étant situé dans la moitié avant de ladite poutre principale, au moins des montants verticaux de support avant et arrière qui se projettent vers le haut à partir des extrémités avant et arrière de la poutre principale, et au moins des traverses supérieures avant et arrière qui reposent sur lesdits montants verticaux de support avant et arrière, la poutre principale venant se loger entre lesdits longerons latéraux dans la position basse du support principal,
c) une bielle principale comprenant deux tiges latérales articulées chacune d'une part au voisinage d'une extrémité de ladite traverse supérieure de tête et d'autre part sur une extrémité de ladite traverse supérieure avant, et au moins une entretoise principale reliant les deux tiges latérales,
d) une liaison rigide articulée disposée entre d'une part une zone située au voisinage de ladite traverse inférieure de tête et d'autre part la partie inférieure dudit montant vertical inférieur,
e) un vérin principal de levage disposé axialement et articulé d'une part au voisinage de ladite traverse inférieure de tête et d'autre part sur l'entretoise principale de la bielle principale dans une partie proche de ladite traverse supérieure avant, pour déplacer en hauteur ledit support principal par rapport au piétement,
f) un panneau de buste monté sur ladite traverse supérieure avant par l'intermédiaire de biellettes articulées sur les extrémités latérales de ladite traverse supérieure avant,
g) un panneau d'assise et de pied monté d'une part sur ladite traverse supérieure arrière par l'intermédiaire de biellettes articulées sur les extrémités latérales de ladite traverse supérieure arrière et articulé d'autre part par rapport au panneau de buste à l'aide de biellettes.

Selon un premier mode de réalisation simplifié, ladite liaison rigide articulée est constituée par une simple bielle articulée d'une part au voisinage de la traverse inférieure de tête et d'autre part à la partie inférieure dudit montant vertical inférieur.

Selon un autre mode de réalisation permettant de conférer facilement des mouvements de proclive-déclive, ladite liaison rigide articulée est constituée par un vérin de proclive-déclive articulé d'une part au voisinage de la traverse inférieure de tête et d'autre part à la partie inférieure dudit montant vertical inférieur pour modifier sélectivement l'inclinaison du support principal par rapport à l'horizontale.

Selon une caractéristique particulière de l'invention, le lit comprend en outre un vérin de levage du panneau de buste disposé au voisinage de la partie centrale de la poutre principale et dont une extrémité est articulée au voisinage de ladite poutre principale tandis que l'autre extrémité est articulée sur un levier relié aux biellettes de liaison entre la traverse supérieure avant et le panneau de buste.

A titre de sécurité, le vérin de levage du panneau de buste peut comporter une extrémité articulée sur une biellette de débrayage elle-même articulée sur ladite poutre principale, et un système de levier solidaire de l'extrémité dudit vérin articulée sur la biellette de débrayage et de butée horizontale solidaire de ladite poutre principale pour permettre un rabattement du panneau de buste en cas de panne de fonctionnement du vérin de levage du panneau de buste.

Avantageusement, le vérin principal de levage est articulé sur la traverse inférieure de tête par l'intermédiaire d'une biellette verticale qui, en position levée du support principal, est en butée sur la traverse inférieure de tête, et, en position basse du support principal peut se décoller de ladite traverse inférieure de tête pour provoquer un débrayage automatique du vérin principal lorsque le support principal est amené en butée sur un dispositif d'arrêt.

Cette caractéristique permet de garantir qu'en position basse du support principal, le vérin principal de levage ne vient exercer aucun effet pouvant perturber par exemple une pesée du lit.

Selon un aspect particulier de l'invention, le lit médicalisé modulaire comprend un module de pesée amovible comprenant d'une part un bâti intermédiaire en forme de T avec une branche transversale munie de pions destinés à venir s'engager dans des orifices ménagés dans un premier longeron latéral pour supporter le module de pesée par rapport audit premier longeron et une branche principale essentiellement perpendiculaire à ladite branche transversale et présentant une plaque d'extrémité munie d'un pion destiné à venir s'engager dans un orifice formé dans le deuxième longeron latéral ou une plaque solidaire de ce longeron, et d'autre part un dispositif de pesée proprement dit correspondant au fléau de mesure disposé parallèlement à la branche principale du bâti intermédiaire, sans contact avec celle-ci, le fléau de mesure étant monté, par rapport au bâti intermédiaire, autour d'un axe horizontal 011 situé au voisinage de la branche transversale, le fléau de mesure portant en outre dans sa partie centrale un galet d'appui monté autour d'un axe horizontal 012 et destiné à recevoir la poutre principale du support principal placé en position basse, et le fléau de mesure reposant par sa deuxième extrémité libre sur une extrémité d'un capteur de flexion dont l'autre extrémité repose en un point 013 par une articulation à couteau sur ledit bâti intermédiaire, les axes ou zones de contact 011, 012, 013 étant alignés sensiblement dans le même plan.

Selon un mode particulier de réalisation permettant notamment de réaliser des pesées d'une façon simplifiée et très fiable, le lit comprend en outre un module additionnel interposé entre le support principal et les traverses inférieure et supérieure de tête du piétement, ledit module additionnel comprend d'une part une traverse supérieure additionnelle montée parallèlement à la traverse supérieure de tête du piétement et reliée à cette dernière par des première et deuxième biellettes additionnelles de même longueur reliées rigidement entre elles par des éléments de renfort et d'autre part un montant vertical additionnel solidaire de ladite traverse supérieure additionnelle et relié à la traverse inférieure de tête par une troisième biellette additionnelle de même longueur que lesdites première et deuxième biellettes additionnelles, les deux tiges latérales de la bielle principale sont articulées chacune d'une part sur une extrémité de ladite traverse supérieure additionnelle et d'autre part sur une extrémité de ladite traverse supérieure avant, la liaison rigide articulée est disposée entre d'une part une partie inférieure dudit montant vertical additionnel et d'autre part la partie inférieure dudit montant vertical inférieur et le vérin principal de levage est articulé d'une part sur la partie inférieure dudit montant vertical additionnel et d'autre part sur l'entretoise principale de la bielle principale dans une partie proche de ladite traverse supérieure avant.

La mise en oeuvre d'un tel module additionnel, qui ne modifie pas la structure du piétement et n'implique qu'une adaptation très simple des ancrages de la bielle principale, de la liaison rigide articulée et du vérin principal de levage, peut s'effectuer sans difficulté sur tout lit médicalisé modulaire conforme à l'invention. La présence de ce module additionnel facilite l'utilisation d'un système de pesée intégrée permettant de mesurer le poids de l'ensemble constitué par le module additionnel et l'ensemble de la partie du lit qui est mobile verticalement. La pesée peut être effectuée de façon fiable et reproductible indépendamment de la position verticale du lit et de la position du patient sur le lit à l'aide d'un module de pesée simple.

De façon plus particulière, le module de pesée utilisable comprend un capteur de pesée qui est fixé rigidement par l'une de ses extrémités sur la traverse inférieure de tête et est en appui par une autre extrémité sur la face inférieure d'une pièce d'appui solidaire dudit montant vertical additionnel.

Selon un autre aspect particulier de l'invention, le panneau de buste et le panneau d'assise et de pied sont réalisés en un matériau transparent aux rayons X et sont disposés à une faible hauteur au-dessus desdites traverses supérieures avant et arrière en ménageant un espace libre par rapport à celle-ci permettant l'introduction d'une plaque de radiographie disposée dans un tiroir coulissant dans des glissières fixes montées sur des rebords verticaux rabattus vers le bas dudit panneau de buste, les glissières se prolongeant légèrement au-delà de l'articulation entre le panneau de buste et le panneau d'assise et de pied.

Avantageusement, le lit comprend des moyens de verrouillage de la position du panneau de buste pendant une opération de radiographie.

Le lit médicalisé selon l'invention peut encore présenter diverses caractéristiques particulières avantageuses.

La traverse supérieure de tête et les traverses supérieures avant et arrière débordent vers l'extérieur par rapport aux longerons latéraux.

La traverse supérieure de tête est munie de supports pour un dosseret de tête.

La traverse supérieure arrière est munie de supports pour un dosseret de pied.

Les biellettes reliant le panneau d'assise et de pied à ladite traverse supérieure arrière présentent une hauteur réglable.

Le lit peut en outre comprendre des bas-flancs constitués par des barres latérales escamotables en forme d'arceaux montées sur des articulations disposées sur les extrémités latérales desdites traverses supérieures avant et arrière.

Chaque bas-flanc comprend un premier montant articulé sur une première articulation, un deuxième montant articulé sur une deuxième articulation, une première partie tubulaire en forme de U solidaire du premier montant, une deuxième partie tubulaire en forme de crosse solidaire du deuxième montant, un premier tube rectiligne reliant par des articulations une extrémité de la première partie tubulaire et l'extrémité de la branche la plus courte de la deuxième partie tubulaire, un deuxième tube rectiligne relié par une articulation à l'autre extrémité de la première partie tubulaire et par une articulation à une zone intermédiaire de la deuxième partie tubulaire de façon à chevaucher celle-ci, et des moyens de verrouillage de l'extrémité de la branche la plus longue de la deuxième partie tubulaire par rapport au deuxième tube rectiligne.

Selon une variante de réalisation, le panneau d'assise et de pied comprend un panneau de pied proprement dit articulé par des biellettes sur les extrémités latérales de ladite traverse supérieure arrière et un panneau d'assise articulé par rapport au panneau de buste par des biellettes, le panneau de pied et le panneau d'assise étant eux-mêmes reliés entre eux par des biellettes, et l'extrémité avant du panneau de pied étant en outre reliée par une biellette verticale par rapport à une traverse supérieure médiane disposée dans un plan commun avec celui des traverses supérieures avant et arrière du support principal et reliée à la poutre principale par un montant médian.

D'autres caractéristiques et avantages de l'invention ressortiront de la description suivante de modes particuliers de réalisation de l'invention donnés à titre d'exemples non limitatifs, en référence aux dessins annexés, sur lesquels :
- la figure 1 est une vue en élévation, de côté, d'un lit médicalisé modulaire selon l'invention, le support de sommier étant horizontal et en position basse,
- la figure 2 est une vue de dessus du lit médicalisé de la figure 1,
- la figure 3 est une vue en élévation de la tête du lit des figures 1 et 2,
- la figure 4 est une vue schématique en perspective éclatée montrant les éléments essentiels de la structure mécanique de base d'un lit médicalisé selon l'invention, et l'adaptation d'un module de pesée,
- la figure 5 est une vue partielle en élévation d'une variante de réalisation de l'invention montrant un ensemble de trois panneaux de support d'un matelas articulés sur le support de base,
- la figure 6 est une vue en perspective d'un support à trois panneaux selon la figure 5 équipé d'un module de radiographie,
- la figure 7 est une section selon la ligne VII-VII de la figure 6,
- la figure 8 est une vue en élévation d'un bas flanc adaptable à un lit médicalisé selon l'invention,
- les figures 9 et 10 sont des vues de détail de deux dispositifs de verrouillage d'un bas-flanc selon la figure 8,
- la figure 11 est une vue en coupe d'un module de pesée selon le plan XI-XI de la figure 12,
- la figure 12 est une vue de dessus d'un module de pesée adaptable au lit médicalisé selon l'invention,
- la figure 13 est une section selon le plan XIII-XIII de la figure 11,
- la figure 14 est une section selon le plan XIV-XIV de la figure 12,
- la figure 15 est une vue partielle en élévation, de côté, d'une tête de lit selon une variante de réalisation de l'invention mettant en oeuvre un module additionnel permettant l'incorporation d'un module de pesée, et
- la figure 16 est une vue en perspective du module additionnel représenté sur la figure 15.

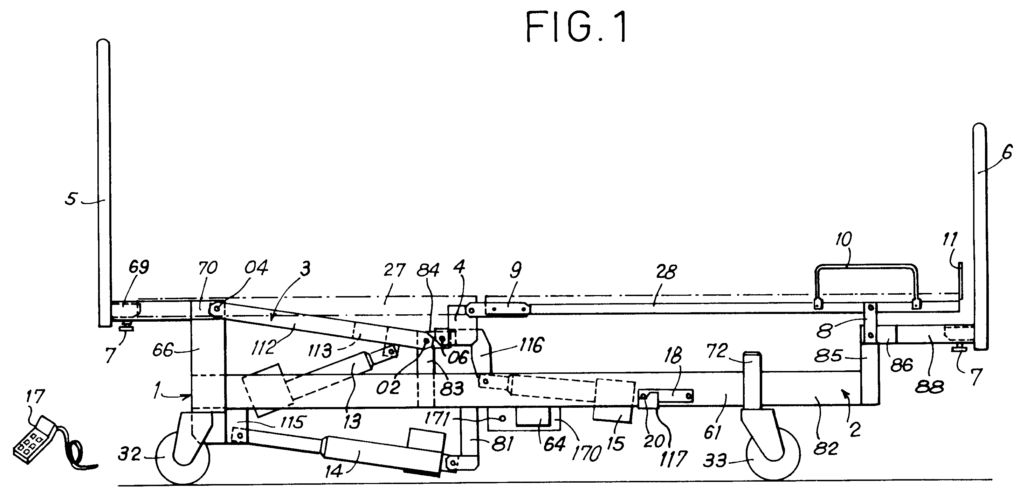

Si l'on considère en premier lieu les figures 1 à 4, on voit la structure mécanique d'ensemble d'un lit médicalisé selon l'invention, qui comprend essentiellement un châssis ou piétement 1 sur lequel est rapporté un support principal 2 qui est monté en porte-à-faux par rapport au piétement 1 et peut se déplacer verticalement par rapport à celui-ci.

Le piétement 1 comprend essentiellement deux longerons latéraux 61, 62 constitués par des tubes métalliques réunis par une entretoise médiane 64 de faible hauteur disposée sous les longerons 61, 62 pour laisser libre tout l'espace compris entre ces longerons 61, 62.

Chaque longeron 61, 62 est relié à ses extrémités avant et arrière à des montants avant 66, 65 et arrière 72, 71 de support de pied, ces montants de support de pied 65, 66, 71, 72 étant adaptés pour recevoir l'axe d'une roulette de pied 32 ou 33 orientable. Un système de freinage centralisé, connu en soi, peut être installé pour immobiliser tout ou partie des roues 32, 33 en orientation ou en roulement comme cela est indiqué ci-dessous.

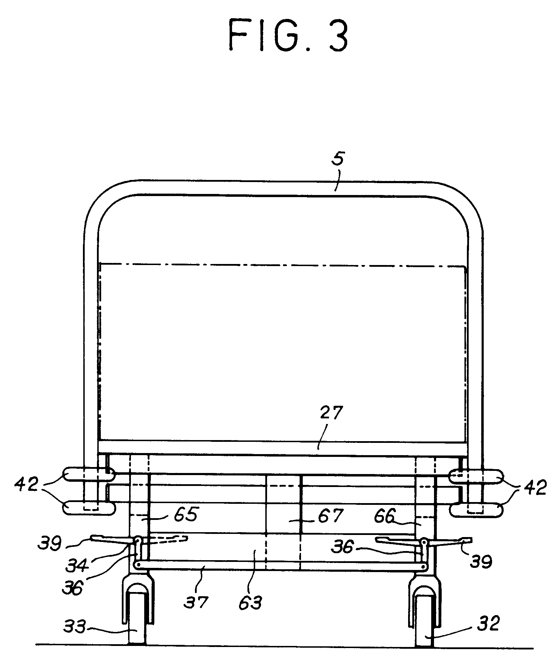

Les montants de support de pied avant 66, 65 solidaires des longerons 61, 62 sont reliés entre eux par un tube métallique transversal 63 qui constitue une entretoise inférieure de tête et le long duquel est disposée une tringle 37 de couplage entre des biellettes 36 qui sont disposées sur les montants de support de pied avant 65, 66 et avec lesquelles coopèrent des tiges hexagonales 34 disposées dans les longerons 61, 62 (figure 3) et des pédales de manoeuvre 39, 39' qui assurent la commande du fieinage de l'ensemble des roulettes avant et arrière 32, 33. Les pédales 39, 39' sont avantageusement situées selon une configuration classique, c'est-à-dire l'une à l'avant (pédale 39 à droite sur la figure 3) et l'autre à l'arrière, en diagonale par rapport à la première (pédale 39' à gauche sur la figure 3). Ce système classique de blocage centralisé des quatre roulettes 32, 33 à partir de l'une ou l'autre des pédales 39, 39' généralement intégré dans un cadre rectangulaire, est ainsi applicable à un piétement 1 en forme de U réalisé conformément à l'invention.

Une traverse supérieure de tête 70, qui peut déborder latéralement de quelques centimètres au-delà des longerons 61, 62, est montée sur les montants de support de pied avant 65, 66 et le cas échéant sur un montant central de renfort 67 reposant sur la traverse inférieure 63. La traverse supérieure de tête 70 qui est ainsi surélevée par rapport aux longerons 61, 62 et à la traverse inférieure 63, peut être prolongée vers l'avant par deux supports horizontaux 68, 69 sur lesquels est monté de façon amovible un dosseret de tête 5 à l'aide d'éléments de liaison 7.

Le support principal 2 est monté en porte-à-faux de façon articulée sur la traverse supérieure de tête 70.

Ce support principal 2 comprend une poutre métallique principale 82 en caisson, de section relativement importante pour présenter une grande rigidité, qui est disposée selon l'axe longitudinal du lit. Un montant vertical inférieur 81 se projette vers le bas à partir de la poutre principale 82, dans la moitié avant de celle-ci, un peu en retrait par rapport à l'extrémité avant de la poutre.Des montants verticaux de support avant 83 et arrière 85 se projettent vers le haut à partir des extrémités avant et arrière de la poutre principale 82. Des traverses supérieures avant 84 et arrière 86, présentant une largeur sensiblement égale à celle de la traverse supérieure de tête 70, sont fixées sur les montants verticaux avant 83 et arrière 85. Les traverses 84 et 86, qui présentent une grande rigidité sont de préférence métalliques.

Le support principal 2 est articulé par rapport au piétement 1 au moyen d'une bielle principale 3 qui comprend deux tiges latérales 111, 112 qui sont articulées d'une part à leur partie inférieure autour d'axes 03, 04 situés aux extrémités de la traverse supérieure de tête 70, et qui sont avantageusement constitués par une tige transversale unique 131 s'étendant le long de toute la traverse supérieure de tête 70, et d'autre part à leur partie supérieure autour d'axes 01, 02 situés aux extrémités de la traverse supérieure avant 84, et qui sont également avantageusement constitués par une tige transversale unique 132 s'étendant sur toute la longueur de cette traverse supérieure avant 84.

La bielle principale 3 est rigidifiée grâce à une entretoise principale 113 qui relie entre elles les deux tiges latérales 111, 112, et à des tirants 114 inclinés par rapport à l'entretoise 113, qui relient le centre de cette dernière à chacune des tiges latérales 111, 112.

Un vérin 13 de montée-descente, qui est de préférence un vérin électrique commandé à partir d'un boîtier de commande 17 (figure 1) est monté de manière à pouvoir exercer un effort de poussée entre la traverse inférieure 63 du piétement 1 et le support principal 2. De façon plus particulière, l'effort de la tige du vérin 13 est appliqué sur la bielle 3 au niveau de l'entretoise 113, au centre de celle-ci, tandis que le corps du vérin 13 est articulé, soit directement sur la traverse inférieure 63, soit de préférence sur une biellette verticale 115 elle-même articulée sur la traverse inférieure 63. Dans ce dernier cas, en position levée du support principal 2, la biellette 115 est en butée contre la traverse inférieure de tête 63 tandis qu'en position basse du support principal 2, cette biellette se décolle de la traverse 63, ce qui provoque un débrayage automatique du vérin principal de levage 13 lorsque le support principal 2 est abaissé et vient en butée par exemple sur un module de pesage 100 qui sera décrit plus loin. L'action du vérin 13 peut ainsi être temporairement supprimée en position basse extrême du support principal 2.

Une liaison rigide articulée 14, qui peut être une simple bielle, est effectuée entre d'une part la traverse inférieure de tête 63 et d'autre part la partie inférieure du montant vertical inférieur 81 qui se projette vers le bas à partir de la poutre 82. Cette liaison rigide articulée 14 contribue à définir avec la bielle principale 3, les montants de support de pied avant 65, 66, et l'ensemble des montants 81, 83, qui sont situés tous deux au voisinage de la traverse supérieure avant 84 et présentent une hauteur totale voisine de celle des montants de support de pied avant 65, 66, un parallélogramme déformable unique lors des mouvements de montée-descente du support principal 2 par rapport au piétement 1.

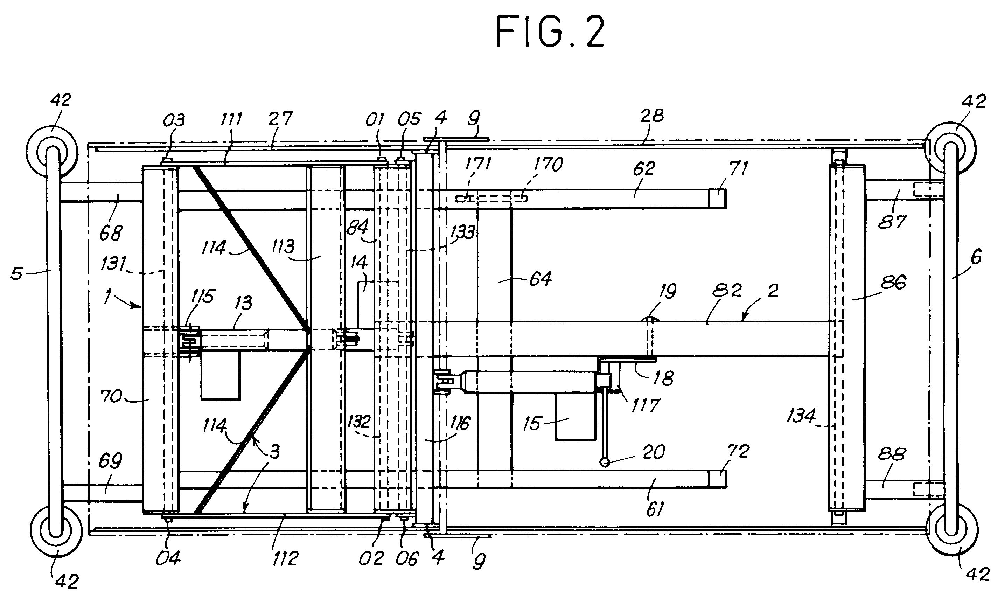

De façon avantageuse, la liaison rigide articulée 14 est toutefois préférentiellement réalisée, comme représenté sur les figures 1 et 2, par un vérin 14 de proclive-déclive. Le vérin 14 dont le corps est articulé à la base du montant vertical inférieur 81 et la tige est articulée sur la traverse inférieure 63 joue en effet le rôle de tige complétant un parallélogramme déformable lors des mouvements de montée-descente du support principal 2 dans une position horizontale, mais permet en outre, par la modification de la distance entre la traverse inférieure 63 et le montant inférieur 81, de provoquer des inclinaisons du support principal 2 par rapport à l'horizontale, (mouvements de proclive ou déclive). Le vérin 14 peut être un vérin électrique comme le vérin de levage 13.

Comme cela est représenté en traits mixtes sur les figures 1 et 2, le sommier du lit est réalisé, conformément à l'invention, sous la forme d'un ensemble de panneaux indépendants. Le premier panneau est constitué par un panneau de buste 27 qui est monté à la tête du lit sur la traverse supérieure avant 84 du support principal 2 par l'intermédiaire de biellettes 4 qui sont articulées sur les extrémités latérales de la traverse supérieure avant 84 autour d'axes 05, 06 qui sont avantageusement constitués par une tige unique 133 s'étendant sur toute la longueur de cette traverse.

Un second panneau 28 constitue un panneau d'assise et de pied. Ce second panneau 28 est monté à sa partie arrière sur la traverse supérieure arrière 86 par des biellettes 8 articulées sur les extrémités latérales de la traverse supérieure arrière 86, autour d'axes constitués de préférence par une tige unique 134 s'étendant sur toute la longueur de cette traverse 86. Le second panneau 28 est par ailleurs articulé à sa partie avant directement sur le panneau de buste 27 par l'intermédiaire de biellettes 9.

Les panneaux 27, 28 peuvent être équipés, sur leurs rebords, d'arceaux 10, 11 (figure 1) de retenue d'un matelas.

Le sommier du lit peut être constitué par un ensemble de plus de deux panneaux 27, 28.

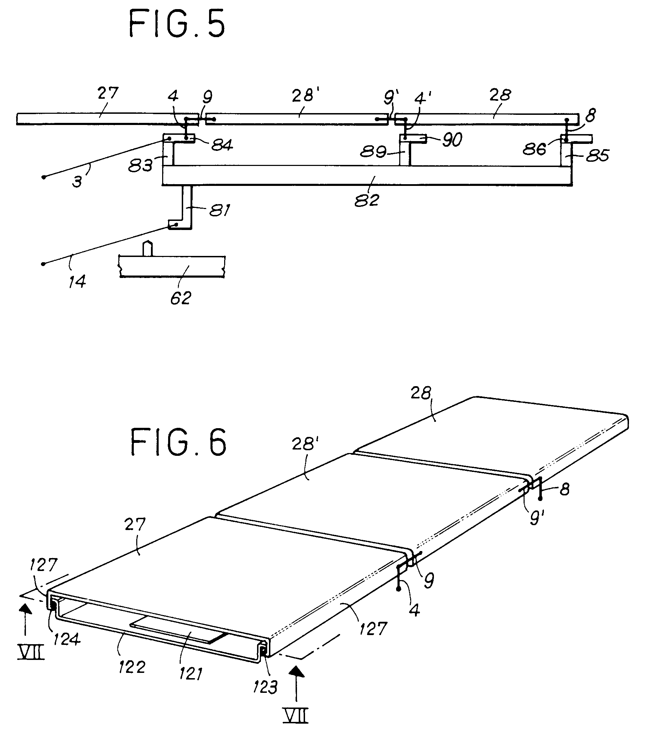

Ainsi, sur les figures 5 et 6, on a représenté un sommier à trois panneaux, à savoir un panneau de buste 27, comme dans le mode de réalisation des figures 1 et 2, un panneau d'assise 28' et un panneau de pied 28. Dans ce cas, le panneau d'assise et de pied 28 des figures 1 et 2 est ainsi subdivisé en deux panneaux indépendants. Le panneau de pied 28 est monté à sa partie arrière, comme indiqué précédemment, par des biellettes verticales 8 articulées sur les extrémités latérales de la traverse supérieure arrière 86, tandis que la partie avant du panneau de pied 28 est articulée par des biellettes 9' sur la partie arrière du panneau d'assise 28', la partie avant du panneau d'assise 28' étant elle-même articulée par des biellettes 9 sur la partie arrière du panneau de buste 27. Dans la présente description, les termes "avant" et "arrière" doivent naturellement être compris comme signifiant respectivement "le plus près de la tête du lit" et "le plus près du pied du lit".

Dans le cas où le panneau d'assise et de pied des figures 1 et 2 est, comme dans les figures 5 et 6, subdivisé en un panneau d'assise 28' et un panneau de pied proprement dit 28, il est ajouté sur le support principal 2 un montant intermédiaire supplémentaire 89 qui se projette vers le haut à partir de la poutre principale 82 parallèlement aux montants supérieurs avant et arrière 83, 85, et qui supporte une traverse supérieure intermédiaire 90 qui est disposée dans un plan commun avec celui des traverses supérieures avant et arrière 84, 86. La partie avant du panneau de pied 28 est ainsi également articulée par l'intermédiaire de biellettes verticales 4' par rapport aux extrémités latérales de la traverse supérieure intermédiaire 90.

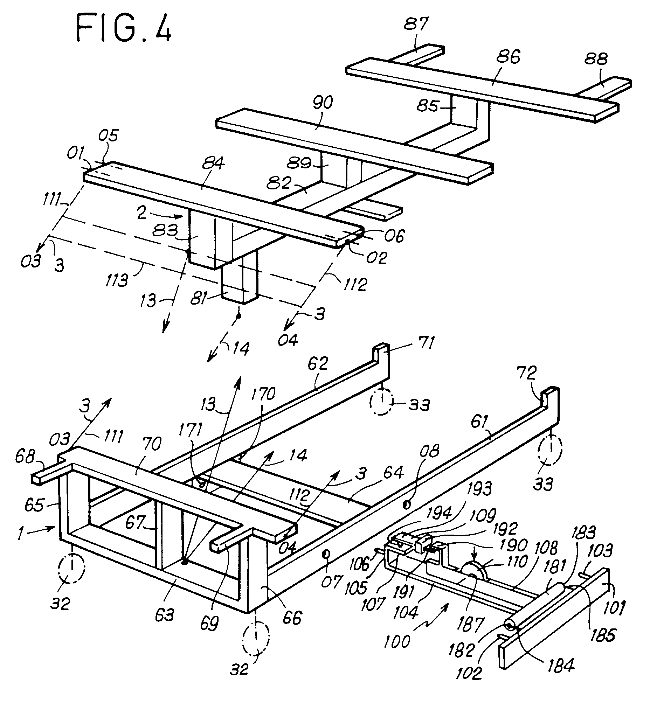

Sur la figure 4, on a fait apparaître sur le support principal 2 une traverse supérieure intermédiaire 90 et le montant intermédiaire correspondant 89 tandis que les figures 1 et 2 concernent elles-mêmes un support prévu pour un sommier réalisé seulement en deux parties.

Dans tous les cas, il est avantageux de prévoir la mise en oeuvre d'un vérin 15 de levage du panneau de buste 27 qui, comme représenté sur les figures 1 et 2, est disposé au voisinage de la partie centrale de la poutre principale 82. Le corps du vérin 15 est articulé au voisinage de cette poutre principale 82 tandis que la tige de vérin est articulée sur un levier 116 relié aux biellettes 4 de liaison entre la traverse supérieure avant 84 et le panneau de buste 27.

Il est préférable qu'en cas de panne d'alimentation du vérin 15 de levage du panneau de buste 27, il soit possible de ramener manuellement le panneau de buste 27 dans sa position horizontale.

Le corps du vérin 15 est ainsi articulé sur une biellette de débrayage 18, elle-même articulée autour d'un axe horizontal 19 traversant la poutre principale 82. L'extrémité du corps du vérin articulée sur la biellette 18 est prolongée latéralement par un levier de manoeuvre 20 qui permet, en cas de défaillance de l'alimentation du vérin 15 placé en position de travail, c'est-à-dire dans une position où le panneau de buste 27 est relevé, de déplacer manuellement le corps de vérin 15 par rapport à une butée 117 solidaire de la poutre principale 82. En fonctionnement normal, il y a arcboutement du système. La force de poussée du vérin 15 fait tourner le levier d'appui 20 vers le bas et le place en appui contre la butée 117. Pour débrayer, il suffit d'appuyer sur le panneau de buste 27, qui provoque un soulèvement du levier. Lors d'une remise en route, le vérin 15 provoque automatiquement un réenclenchement du levier 20 sur la butée 117.

Le vérin 15 de levage du panneau de buste 27 agit de façon indépendante du vérin principal de levage 13 et du vérin 14 de mouvement de proclive-déclive, et, par sa position au centre du lit, dans l'espace libre entre les longerons 61, 62, peut être installé facilement sous forme d'option sur un lit de base qui ne serait équipé que du seul vérin principal 13. De même, le vérin 14 de proclive-déclive peut être installé à titre d'option à la place d'une simple bielle équipant une version de base du lit médicalisé modulaire.

Grâce au fait que la tige du vérin principal de levage 13 agit préférentiellement sur l'entretoise 113 de la bielle principale plutôt que sur la traverse supérieure avant 84, les mouvements de proclive-déclive peuvent être provoqués par le vérin 14 de proclive-déclive d'une façon indépendante de la position en hauteur du support principal 2 définie par le vérin principal 13.

Les articulations entre les panneaux 27, 28', 28 du sommier ont elles-mêmes pour but d'augmenter le confort du patient lors d'une opération de levage du panneau de buste, et de permettre l'insertion d'un module de radiographie, comme cela sera décrit plus loin.

Le fait que l'articulation du panneau de buste 27 par les biellettes verticales 4 se situe en-dessous du plan du sommier et en arrière par rapport à l'articulation par les biellettes 9 avec le panneau suivant 28 ou 28', contribue lors d'une levée du panneau de buste 27, à faire légèrement descendre l'avant du panneau d'assise 28 ou 28' et à définir ainsi un creux évitant au patient de glisser vers le pied du lit. Par ailleurs, la présence de biellettes verticales d'appui 8, 4' pour le panneau de pied 28 ou le panneau d'assise 28' permet d'encaisser de petits mouvements horizontaux et contribue à faciliter le positionnement des panneaux 28, 28' lors des divers mouvements du mécanisme de support du sommier.

Les panneaux 27, 28, 28' du sommier sont de préférence réalisés en une matière transparente aux rayons X, telle que du PVC par exemple, et présentent un bord latéral 127 rabattu pour augmenter sa rigidité.

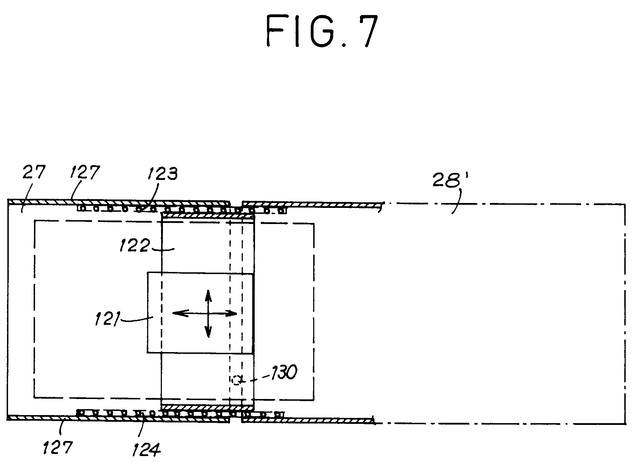

Par l'absence de cadre métallique au niveau du sommier, et la présence d'un espace libre entre la partie centrale des panneaux 27, 28', 28 et les traverses métalliques supérieures de support 84, 86, 90, il est possible d'introduire par la tête du lit, sous le panneau de buste 27, un module de radiographie comprenant une plaque sensible 121 placée dans un tiroir 122, lui-même monté coulissant dans des glissières 123, 124, par exemple des glissières à billes qui peuvent déborder légèrement au-delà du panneau de buste 27 sous le panneau d'assise 28' (figure 7). Le tiroir rigide 122 peut présenter une course qui va un peu au-delà des glissières 123, 124. L'introduction du module radio amovible (tiroir 122), en position levée du support principal 2, est tout à fait commode, car le mécanisme de commande du panneau de buste 27 (vérin 15) est disposé dans la partie centrale du lit et va sous le panneau de buste 27.

Un moyen 130 de verrouillage de la position du panneau de buste 27 peut être prévu pour éviter une modification intempestive de la position de ce panneau au cours d'une opération de radiographie.

Le dosseret de pied amovible 6 peut être monté directement à l'extrémité du support principal 2 sur des supports horizontaux 87, 88 fixés sur la traverse supérieure arrière 86 par des moyens de fixation 7. Des butoirs 42, qui n'ont été représentés que sur la figure 3, peuvent être montés sur les montants verticaux des tubes définissant les dosserets de tête 5 et de pied 6 (figures 1 et 2).

Le mécanisme constitué des bielles et des vérins de manoeuvre peut être facilement caché par des carénages, non représentés sur les dessins par souci de clarté.

D'autres moyens de réglage manuel peuvent être prévus, par exemple pour des versions non équipées d'un vérin 14 de proclive-déclive. Dans ce cas, les biellettes 8 sur lesquelles est articulé le panneau de pied 28 peuvent ainsi présenter une longueur réglable manuellement, ce qui permet d'incliner légèrement ce panneau 28 par rapport à l'horizontale.

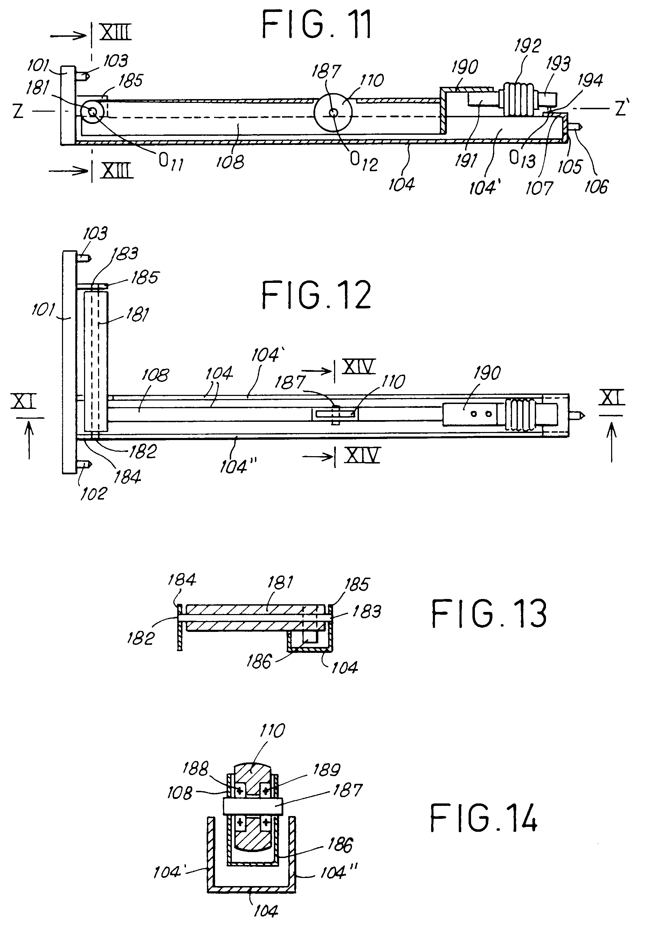

On décrira maintenant en particulier en référence à la figure 4 et aux figures 11 à 14, un module amovible de pesée 100, qui est facilement adaptable à toutes les versions du lit modulaire selon l'invention et peut ainsi être utilisé avec plusieurs lits différents.

La mise en oeuvre d'un mécanisme à un seul parallélogramme pour assurer le montage du support principal 2 sur le piétement 1 garantit que, quelle que soit la position du malade, les efforts verticaux engendrés seront bien toujours pris en compte par un capteur d'effort interposé entre le support 2 et le piétement 1.

Par ailleurs, on a déjà indiqué qu'en position basse du support 2, le vérin 13 pouvait être totalement débrayé, sans exercer d'effort, ce qui contribue à garantir une mesure fiable, seule la masse du vérin 13 intervenant dans la tare au même titre que le reste des éléments constituant le support principal 2, les mécanismes d'articulation, le sommier et le matelas.

Selon l'invention, une pesée du lit, et donc du malade, peut être effectuée à l'aide d'un seul capteur d'effort 192 qui prend en compte l'ensemble des efforts verticaux, quelle que soit la position du malade sur le sommier.

Le module de pesée 100 comporte de préférence un bâti intermédiaire 101 à 107 présentant essentiellement la forme d'un T avec une branche transversale 101 qui vient s'appliquer longitudinalement contre l'un 61 des longerons 61, 62 du piétement 1, et une branche principale 104 qui en position de mesure est disposée transversalement, en passant sous le longeron 61, au voisinage de l'entretoise 64, pour venir porter par son extrémité libre 105 contre l'autre longeron 62.

La branche transversale 101 peut se présenter sous la forme d'une plaque verticale munie de deux pions 102, 103 qui viennent s'engager dans des orifices 07, 08 formés dans le longeron 61.

La branche principale 104 peut se présenter sous la forme d'une plaque horizontale prolongée à son extrémité libre opposée à la branche transversale 101 par une plaque verticale 105, qui vient porter contre le second longeron 62 ou une plaque 170 prolongeant le longeron 62 vers le bas (figures 1, 2, 4). La plaque d'extrémité 105 est munie d'un pion 106 qui peut venir s'engager dans un trou 171 formé dans le longeron 62 de la plaque 170. La branche principale 104 peut comporter des bords latéraux 104', 104'' relevés pour définir un profil en U (figures 11 à 14).

Lors d'une opération de pesée, le bâti intermédiaire du module en T 100 est ainsi plaqué contre le longeron 61 par sa branche 101, la branche principale 104 et la partie d'extrémité 105 étant engagées sous le longeron 61, puis les pions 102, 103 sont engagés dans les orifices 07, 08 tandis que le pion 106 est lui-même engagé dans l'orifice 171 de la plaque 170. L'application du bâti intermédiaire du module T 100 sur le longeron 61 en deux points, ainsi que sur un élément solidaire du longeron 62 permet un positionnement correct et assure un découplage par rapport aux déformations éventuelles du piétement 1 du lit.

On décrira maintenant le dispositif de pesée proprement dit qui est monté sur le bâti intermédiaire du module de pesée amovible 100.

Le dispositif de pesée comprend un fléau de mesure 108 disposé parallèlement à la branche principale 104 du bâti intermédiare, au-dessus de celle-ci et sans contact avec celle-ci. Le fléau 108 est solidaire, à son extrémité voisine de la branche transversale 101 du bâti intermédiaire en T, d'un arbre horizontal 181 parallèle à la branche transversale 101 et monté à l'aide de roulements 182, 183 sur des supports 184, 185 rattachés à la branche transversale 101 du bâti intermédiaire, dans une zone située de préférence sous les pions 102, 103 de positionnement de ce bâti intermédiaire.

Le fléau de mesure 108 présente, à son extrémité opposée à la branche 101, une partie horizontale 190 légèrement surélevée qui vient porter sur une extrémité 191 d'un capteur de flexion 192 dont l'autre extrémité 193 repose, par l'intermédiaire d'une pointe 194, sur une plaque horizontale 107 disposée à la partie supérieure de la plaque verticale d'extrémité 105 du bâti intermédiaire en T.

Le fléau de mesure 108 porte dans sa partie centrale un galet d'appui 110 présentant un axe 187 monté à l'aide de roulements 188, 189 (fig 14) sur le fléau 108. Le galet d'appui 110 est destiné à recevoir, lors d'une opération de mesure, la face inférieure de la poutre centrale 82 du support 2 placé en position abaissée.

Le galet d'appui 110 présente une surface d'appui convexe arrondie, de préférence sphérique, qui permet d'éviter des erreurs dues à des inclinaisons de la poutre centrale 82.

L'axe 187 du galet d'appui 110, repéré 012 sur la figure 11, l'axe 011 de l'arbre d'articulation 181 du fléau 108 du côté de la branche 101, et la pointe 194, repérée 013 sur la figure 11, par laquelle le dispositif de pesée repose sur la plaque 107 du bâti intermédiaire, sont pour l'essentiel situés dans un même plan 22', ce qui réduit fortement la sensibilité aux variations de l'angle que fait avec la verticale le vecteur représentant l'effort exercé par le support 2 sur le galet 110 lors d'une opération de mesure. La constance des bras de levier 011, 012 et 011, 013 et le fait que l'effort exercé par le support 2 passe toujours par l'axe 012, quelle que soit la direction de cet effort, garantissent des mesures fiables et répétitives. La présence d'un bâti intermédiaire entre le piétement 1 et le dispositif de pesée proprement dit du module de pesée 100 garantit par ailleurs que les déformations éventuelles du piétement seront sans influence sur les mesures. Un léger jeu est ménagé entre la branche 101 et le longeron 61, de même qu'entre la plaque 170 ou le longeron 62 et la plaque d'extrémité 105.

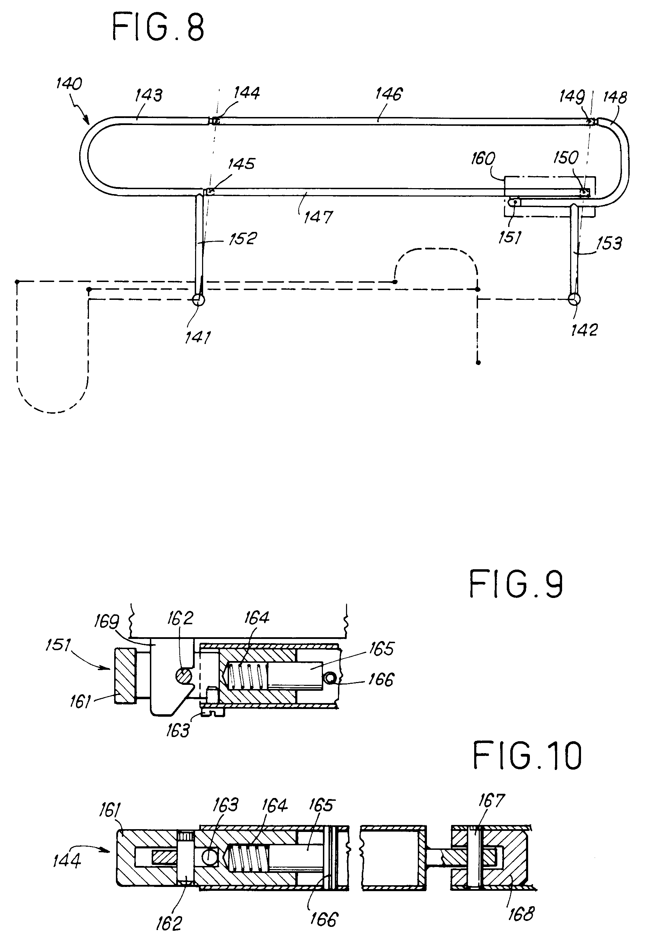

Le lit médicalisé selon l'invention peut recevoir divers accessoires, tels que des bas-flancs escamotables 140 destinés à constituer des barrières latérales pour le malade. Un exemple de bas-flancs 140 est illustré sur la figure 8.

Le bas-flanc 140 est dans ce cas constitué par deux montants 152, 153 qui sont montés sur des articulations 141, 142 pouvant être avantageusement constituées par les tiges 133, 134 (figure 2) des biellettes verticales 4, 8 de fixation des panneaux 27, 28 du sommier du lit.

Le montant 152 porte un tube 143 en forme de U dont une extrémité est reliée par une articulation 145 à une première extrémité d'une barre tubulaire horizontale 147 et l'autre extrémité est reliée de façon amovible par une articulation 144, dont un exemple de réalisation est illustrée sur la figure 10, à une première extrémité d'une autre barre tubulaire horizontale 146.

Le montant 153 porte de même un tube 148 en forme de crosse dont la branche la plus courte est reliée à son extrémité libre par une articulation 149 à la deuxième extrémité de la barre horizontale 146, et dont la branche la plus longue est reliée par une articulation 150, située au voisinage du montant 153, à la deuxième extrémité de la barre horizontale 147. Un dispositif de verrouillage 160 comprend en outre un organe de verrouillage 151, dont un exemple de réalisation est illustré sur la figure 9, et qui relie l'extrémité de la branche la plus longue de la crosse 148 à la barre horizontale 147.

En position escamotée, après déverrouillage de l'organe de verrouillage 151, puis ouverture de l'articulation 144, les pièces du bas-flanc 140 peuvent venir dans la position représentée en pointillés sur la figure 8.

Les figures 9 et 10 montrent des vues selon deux plans perpendiculaires de l'organe de verrouillage 151 et de l'articulation déconnectable 144, qui présentent pour l'essentiel des organes communs.

Un bouton de manoeuvre 161 porte un axe de verrouillage 162 pouvant coopérer avec un crochet 169 solidaire de la barre 147 dans le cas de la figure 9. Une vis de retenue 163 sert à retenir dans le tube l'élément de verrouillage en forme de cylindre. Les références 164, 165 et 166 désignent respectivement un ressort de verrouillage, un piston et une goupille d'appui.

La figure 10 montre en outre un embout d'articulation 168 muni d'un axe moleté 167.

On notera en référence à la figure 8 que le report du verrou 151 à une distance relativement importante du centre d'articulation des barrières 147, 146 permet de réduire les efforts exercés sur ce verrou. D'une manière générale, le bas-flanc 140 peut être réalisé à partir de pièces légères non-surdimensionnées.

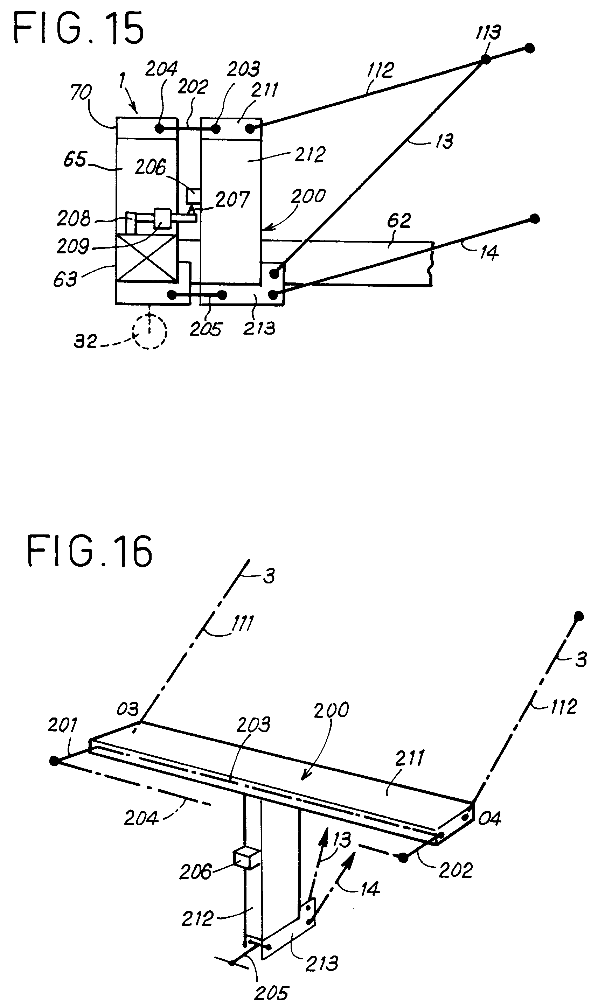

On a représenté sur les figures 15 et 16 une variante de réalisation du lit médicalisé modulaire selon l'invention, qui permet la mise en oeuvre d'un système de pesée intégrée simplifiée.

Selon cette variante de réalisation, le piétement 1 et le support principal 2 en porte-à-faux peuvent être réalisés de la façon décrite précédemment en référence aux figures 1 à 7. Toutefois, un module additionnel 200 est interposé entre le piétement 1 et le support principal 2 de façon à pouvoir intégrer un module de pesée simplifié.

Le module additionnel 200 comprend une traverse supérieure 211 qui est montée parallèlement à la traverse supérieure de tête 70 du piétement 1, et un montant vertical 212 sur lequel est fixée la traverse supérieure 211.

La traverse supérieure 211 est reliée à la traverse supérieure de tête 70 par deux biellettes 201, 202 de même longueur reliées rigidement entre elles par des éléments de renfort 203, 204 qui peuvent être constitués par des tiges imposant aux biellettes 201, 202 de se déplacer ensemble. La partie inférieure du montant vertical 212 est elle-même reliée à la traverse inférieure de tête 63 par une troisième biellette 205 qui présente également la même longueur que les biellettes 201, 202.

Le module additionnel 200 peut ainsi se déplacer verticalement par rapport au piétement 1 en restant parallèle à ce dernier, grâce au mouvement du parallélogramme constitué par les biellettes 201, 202, 205 de même longueur, parallèles entre elles.

Le module additionnel peut être installé très facilement sur un lit médicalisé tel que celui décrit en référence aux figures 1 à 7, puisqu'il suffit d'ajouter trois liaisons à l'aide des biellettes 201, 202, 205, et de déplacer légèrement les points d'application des éléments de la cinématique constitués par la bielle principale 3, la liaison rigide articulée 14 et le vérin principal de levage 13. Dans la variante des figures 15 et 16 incorporant le module additionnel 200, les deux tiges latérales 111, 112 de la bielle principale 3 sont en effet articulées aux points 03, 04 sur les extrémités de la traverse supérieure 211 du module additionnel 200, au lieu d'être articulées directement sur la traverse supérieure de tête 70.

De même, la liaison rigide articulée 14 qui peut être constituée par un vérin de proclive-déclive ou par une simple bielle, et le vérin principal de levage 13 sont articulés sur une pièce 213 rapportée à la partie inférieure du montant vertical additionnel 212 au lieu d'être articulés directement sur la traverse inférieure de tête 63.

Un module de pesée très simple peut être interposé entre le piétement 1 et le module additionnel 200. Ce module de pesée comprend essentiellement un capteur de pesée 209 qui est fixé rigidement par l'une de ses extrémités 208 sur la traverse inférieure de tête 63 et est en appui par une autre extrémité 207 sur la face inférieure plane d'une pièce d'appui 206 solidaire du montant vertical additionnel 212 sur une face tournée vers la traverse inférieure de tête 63.

Le système décrit en référence aux figures 15 et 16 constitue ainsi une alternative au modèle amovible de pesée 101 décrit en référence aux figures 4 et 11 à 14.

Dans le cas du mode de réalisation des figures 15 et 16, la fixation du vérin vertical 13 peut être simplifiée du fait que ce vérin 13 peut être fixé directement à la partie inférieure 213 du montant vertical 212 et que l'on peut omettre une biellette de débrayage.

On notera que le dispositif décrit en référence aux figures 15 et 16 permet de mesurer le poids de l'ensemble constitué par le module 200, et la partie mobile verticalement du lit comprenant essentiellement les éléments de cinématique 111, 112, 13, 14, le support principal 2, les panneaux 27, 28', 28, de buste, d'assise et de pied, ainsi que le patient.

Grâce à la fixation du parallèlogramme du module additionnel 200, sur le piétement fixe 1 du lit, on peut effectuer une pesée indépendamment de la position verticale du lit et de la position du patient sur le lit.

Dès lors que le module additionnel 200 et le piétement 1 conservent toujours des positions relatives semblables, le capteur de pesée 209 appuie toujours de la même manière sur la pièce d'appui 206 du module additionnel 200, ce qui garantit la fiabilité des mesures, et une grande précision qui peut être par exemple de l'ordre de 0,2 ^{o}/oo

## Revendications

1. Lit médicalisé modulaire, comprenant :
a) un piétement (1) en forme de U comprenant deux longerons latéraux (61, 62) reliant chacun des montants de support de pied avant et arrière (65, 71; 66, 72), au moins une traverse inférieure de tête (63) entretoisant les deux longerons latéraux (61, 62) entre les montants de support de pied avant (65, 66) et au moins une traverse supérieure de tête (70) montée sur le piétement à une hauteur prédéterminée fixe au-dessus de la traverse inférieure de tête (63),
b) un support principal (2) en porte-à-faux comprenant une poutre principale de grande section (82) disposée longitudinalement et axialement, un montant vertical inférieur (81) qui se projette vers le bas à partir de la poutre principale (82), en étant situé dans la moitié avant de ladite poutre principale (82), au moins des montants verticaux de support avant et arrière (83, 85) qui se projettent vers le haut à partir des extrémités avant et arrière de la poutre principale (82), et au moins des traverses supérieures avant et arrière (84, 86) qui reposent sur lesdits montants verticaux de support avant et arrière (83, 85), la poutre principale (82) venant se loger entre lesdits longerons latéraux (61, 62) dans la position basse du support principal (2),
c) une bielle principale (3) comprenant deux tiges latérales (111, 112) articulées chacune d'une part au voisinage d'une extrémité (03, 04) de ladite traverse supérieure de tête (70) et d'autre part sur une extrémité (01, 02)) de ladite traverse supérieure avant (84), et au moins une entretoise principale (113) reliant les deux tiges latérales (111, 112),
d) une liaison rigide articulée (14) disposée entre d'une part une zone située au voisinage de ladite traverse inférieure de tête (63) et d'autre part la partie inférieure dudit montant vertical inférieur (81),
e) un vérin principal de levage (13) disposé axialement et articulé d'une part au voisinage de ladite traverse inférieure de tête (63) et d'autre part sur l'entretoise principale (113) de la bielle principale (3) dans une partie proche de ladite traverse supérieure avant (84), pour déplacer en hauteur ledit support principal (2) par rapport au piétement (1),
f) un panneau de buste (27) monté sur ladite traverse supérieure avant (84) par l'intermédiaire de biellettes (4) articulées sur les extrémités latérales (05, 06) de ladite traverse supérieure avant (84),
g) un panneau d'assise et de pied (28) monté d'une part sur ladite traverse supérieure arrière (86) par l'intermédiaire de biellettes (8) articulées sur les extrémités latérales de ladite traverse supérieure arrière (86) et articulé d'autre part par rapport au panneau de buste (27) à l'aide de biellettes (9).

2. Lit selon la revendication 1, caractérisé en ce que ladite liaison rigide articulée (14) est constituée par une simple bielle articulée d'une part au voisinage de la traverse inférieure de tête (63) et d'autre part à la partie inférieure dudit montant vertical inférieur (81).

3. Lit selon la revendication 1, caractérisé en ce que ladite liaison rigide articulée (14) est constituée par un vérin de proclive-déclive (14) articulé d'une part au voisinage de la traverse inférieure de tête (63) et d'autre part à la partie inférieure dudit montant vertical inférieur (81) pour modifier sélectivement l'inclinaison du support principal (2) par rapport à l'horizontale.

4. Lit selon l'une quelconque des revendications 1 à 3, caractérisé en ce que le vérin principal de levage (13) est articulé sur la traverse inférieure de tête (63) par l'intermédiaire d'une biellette verticale (115) qui, en position levée du support principal (2), est en butée sur la traverse inférieure de tête (63), et, en position basse du support principal (2) peut se décoller de ladite traverse inférieure de tête (63) pour provoquer un débrayage automatique du vérin principal (13) lorsque le support principal (2) est amené en butée sur un dispositif d'arrêt (105).

5. Lit selon l'une quelconque des revendications 1 à 4, caractérisé en ce qu'il comprend en outre un vérin (15) de levage du panneau de buste (27) disposé au voisinage de la partie centrale de la poutre principale (82) et dont une extrémité est articulée au voisinage de ladite poutre principale (82) tandis que l'autre extrémité est articulée sur un levier (116) relié aux biellettes (4) de liaison entre la traverse supérieure avant (84) et le panneau de buste (27).

6. Lit selon la revendication 5, caractérisé en ce que le vérin (15) de levage du panneau de buste (27) comporte une extrémité articulée sur une biellette de débrayage (18) elle-même articulée sur ladite poutre principale (82), et un système de levier (20) solidaire de l'extrémité dudit vérin (15) articulée sur la biellette de débrayage (18) et de butée horizontale (117) solidaire de ladite poutre principale (82) pour permettre un rabattement du panneau de buste (27) en cas de panne de fonctionnement du vérin (15) de levage du panneau de buste (27).

7. Lit selon l'une quelconque des revendications 1 à 6, caractérisé en ce qu'il comprend un module de pesée amovible (100) comprenant d'une part un bâti intermédiaire en forme de T avec une branche transversale (101) munie de pions (102, 103) destinés à venir s'engager dans des orifices (07, 08) ménagés dans un premier longeron latéral (61) pour supporter le module de pesée (100) par rapport audit premier longeron (61) et une branche principale (104) essentiellement perpendiculaire à ladite branche transversale (101) et présentant une plaque d'extrémité (105) munie d'un pion (106) destiné à venir s'engager dans un orifice (171) formé dans le deuxième longeron latéral (62) ou une plaque (170) solidaire de ce longeron (62), et d'autre part un dispositif de pesée proprement dit correspondant au fléau de mesure (108) disposé parallèlement à la branche principale (104) du bâti intermédiaire, sans contact avec celle-ci, le fléau de mesure (108) étant monté, par rapport au bâti intermédiaire, autour d'un axe horizontal 011 situé au voisinage de la branche transversale (101), le fléau de mesure (108) portant en outre dans sa partie centrale un galet d'appui (110) monté autour d'un axe horizontal 012 et destiné à recevoir la poutre principale (82) du support principal (2) placé en position basse, et le fléau de mesure (108) reposant par sa deuxième extrémité libre sur une extrémité (191) d'un capteur de flexion (192) dont l'autre extrémité (193) repose en un point 013 par une articulation à couteau (194) sur ledit bâti intermédiaire, les axes ou zones de contact 011, 012, 013 étant alignés sensiblement dans le même plan.

8. Lit selon l'une quelconque des revendications 1 à 3, caractérisé en ce qu'il comprend en outre un module additionnel (200) interposé entre le support principal (2) et les traverses inférieure et supérieure de tête (63, 70) du piétement (1), en ce que ledit module additionnel (200) comprend d'une part une traverse supérieure additionnelle (211) montée parallèlement à la traverse supérieure de tête (70) du piétement (1) et reliée à cette dernière par des première et deuxième biellettes additionnelles (201, 202) de même longueur reliées rigidement entre elles par des éléments de renfort (203, 204) et d'autre part un montant vertical additionnel (212) solidaire de ladite traverse supérieure additionnelle (211) et relié à la traverse inférieure de tête (63) par une troisième biellette additionnelle (205) de même longueur que lesdites première et deuxième biellettes additionnelles (201, 202), en ce que les deux tiges latérales (111, 112) de la bielle principale (3) sont articulées chacune d'une part sur une extrémité (03, 04) de ladite traverse supérieure additionnelle (211) et d'autre part sur une extrémité (01, 02) de ladite traverse supérieure avant (84),en ce que la liaison rigide articulée (14) est disposée entre d'une part une partie inférieure (213) dudit montant vertical additionnel (212) et d'autre part la partie inférieure dudit montant vertical inférieur (81) et en ce que le vérin principal de levage (13) est articulé d'une part sur la partie inférieure (213) dudit montant vertical additionnel (212) et d'autre part sur l'entretoise principale (113) de la bielle principale (3) dans une partie proche de ladite traverse supérieure avant (84).

9. Lit selon la revendication 8, caractérisé en ce qu'il comprend un module de pesée comprenant un capteur de pesée (209) qui est fixé rigidement par l'une de ses extrémités (208) sur la traverse inférieure de tête (63) et est en appui par une autre extrémité (207) sur la face inférieure d'une pièce d'appui (206) solidaire dudit montant vertical additionnel (212).

10. Lit selon l'une quelconque des revendications 1 à 9, caractérisé en ce que le panneau de buste (27) et le panneau (28) d'assise et de pied sont réalisés en un matériau transparent aux rayons X et sont disposés à une faible hauteur au-dessus desdites traverses supérieures avant et arrière (84, 86) en ménageant un espace libre par rapport à celles-ci permettant l'introduction d'une plaque de radiographie (121) disposée dans un tiroir (122) coulissant dans des glissières fixes (123, 124) montées sur des rebords verticaux rabattus vers le bas (127) dudit panneau de buste (27), les glissières (123, 124) se prolongeant légèrement au-delà de l'articulation entre le panneau de buste (27) et le panneau d'assise et de pied (28).

11. Lit selon l'une quelconque des revendications 1 à 10, caractérisé en ce que le panneau d'assise et de pied (28) comprend un panneau de pied (28) proprement dit articulé par des biellettes (8) sur les extrémités latérales de ladite traverse supérieure arrière (86) et un panneau d'assise (28') articulé par rapport au panneau de buste (27) par des biellettes (9), le panneau de pied (28) et le panneau d'assise (28') étant eux-mêmes reliés entre eux par des biellettes (9'), et l'extrémité avant du panneau de pied (28) étant en outre reliée par une biellette verticale (4') par rapport à une traverse supérieure médiane (90) disposée dans un plan commun avec celui des traverses supérieures avant et arrière (84, 86) du support principal (2) et reliée à la poutre principale (82) par un montant médian (89).

12. Lit selon l'une quelconque des revendications 1 à 11, caractérisé en ce que les tiges latérales (111, 112) de la bielle principale (3) sont articulées autour d'axes communs transversaux (131, 132).

## Claims

1. Modular medicalized bed, comprising:
a) a U-shaped subframe (1) which comprises two side members (61, 62) each connecting front and rear base support uprights (65, 71; 66, 72), at least one lower head crosspiece (63) bracing the two side members (61, 62) between the front base support uprights (65, 66) and at least one upper head crosspiece (70) mounted on the subframe at a fixed predetermined height above the lower head crosspiece (63);
b) a cantilevered main support (2) which comprises a main beam (82) of large cross-section arranged longitudinally and axially, a lower vertical upright (81) which projects downwards from the main beam (82) being located in the front half of the said main beam (82), at least front and rear vertical support uprights (83, 85) which project upwards from the front and rear ends of the main beam (82), and at least front and rear upper crosspieces (84, 86) which rest on the said front and rear vertical support uprights (83, 85), the main beam (82) being housed between the said side members (61, 62) in the low position of the main support (2);
c) a main connecting bar (3) which comprises two side rods (111, 112) each articulated, on the one hand, to a point near one end (03, 04) of the said upper head crosspiece (70) and, on the other hand, to an end (01, 02) of the said front upper crosspiece (84), and at least one main brace (113) which connects the two side rods (111, 112);
d) an articulated rigid linkage (14) arranged between, on the one hand, a region located near the said lower head crosspiece (63) and, on the other hand, the lower part of the said lower vertical upright (81);
e) a main lifting cylinder (13) arranged axially and articulated, on the one hand, to a point near the said lower head crosspiece (63) and, on the other hand, to the main brace (113) of the main connecting bar (3) in a part close to the said front upper crosspiece (84), in order to move the said main support (2) heightwise with respect to the subframe (1);
f) a head-and-shoulders board (27) which is mounted on the said front upper crosspiece (84) via links (4) articulated to the side ends (05, 06) of the said front upper crosspiece (84);
g) a seat-and-foot board (28) which is mounted, on the one hand, on the said rear upper crosspiece (86) via links (8) articulated to the side ends of the said rear upper crosspiece (86) and is articulated, on the other hand, with respect to the head/upper-body board (27) by means of links (9).

2. Bed according to Claim 1, characterized in that the said articulated rigid linkage (14) consists of a single connecting bar articulated, on the one hand, a point near the lower head crosspiece (63) and, on the other hand, to the lower part of the said lower vertical upright (81).

3. Bed according to Claim 1, characterized in that the said articulated rigid linkage (14) consists of an up-sloping/down-sloping cylinder (14) articulated, on the one hand, to a point near the lower head crosspiece (63) and on the other hand, to the lower part of the said lower vertical upright (81) in order selectively to modify the inclination of the main support (2) with respect to the horizontal.

4. Bed according to any one of Claims 1 to 3, characterized in that the main lifting cylinder (13) is articulated to the lower head crosspiece (63) via a vertical link (115) which, in the raised position of the main support (2), is in abutment with the lower head crosspiece (63) and, in the low position of the main support (2), can be separated from the said lower head crosspiece (63) in order to cause automatic disengagement of the main cylinder (13) when the main support (2) is brought into abutment against a stop device (105).

5. Bed according to any one of Claims 1 to 4, characterized in that it further comprises a cylinder (15) for lifting the head/upper-body board (27) arranged near the central part of the main beam (82) and one end of which is articulated to a point near the said main beam (82) while the other end is articulated to a lever (116) connected to the links (4) for linking between the front upper crosspiece (84) and the head/upper-body board (27).

6. Bed according to Claim 5, characterized in that the cylinder (15) for lifting the head/upper-body board (27) includes an end articulated to a disengagement link (18) which is itself articulated to the said main beam (82), and a lever system (20) fastened to that end of the said cylinder (15) which is articulated to the disengagement (18) and horizontal-stop (117) link fastened to the said main beam (82) in order to enable the head/upper-body board (27) to be brought back down should there be a malfunction of the cylinder (15) for lifting the head/upper-body board (27).

7. Bed according to any one of Claims 1 to 6, characterized in that it comprises a removable weighing module (100) comprising, on the one hand, an intermediate T-shaped frame with a transverse branch (101) provided with pins (102, 103) which are to engage in holes (07, 08) made in a first side member (61) in order to support the weighing module (100) with respect to the said first member (61) and a main branch (104) which is essentially perpendicular to the said transverse branch (101) and has an end plate (105) provided with a pin (106) which is to engage in a hole (171) formed in the second side member (62) or a plate (170) fastened to this member (62), and, on the other hand, a weighing device proper, corresponding to the measurement beam (108) arranged so as to be parallel with the main branch (104) of the intermediate frame, without contacting the latter, the measurement beam (108) being mounted, with respect to the intermediate frame, about a horizontal spindle 011 located near the transverse branch (101), the measurement beam (108) further carrying, in its central part, a bearing wheel (110) mounted about a horizontal spindle 012 and designed to receive the main beam (82) of the main support (2) placed in the low position, and the measurement beam (108) resting by its second free end on one end (191) of a bending sensor (192), the other end (193) of which rests at a point 013 by a knife articulation (194) on the said intermediate frame, the spindles or contact regions 011, 012, 013 being aligned substantially in the same plane.

8. Bed according to any one of Claims 1 to 3, characterized in that it further comprises an additional module (200) interposed between the main support (2) and the upper and lower head crosspieces (63, 70) of the subframe (1), in that the said additional module (200) comprises, on the one hand, an additional upper crosspiece (211) mounted so as to be parallel with the upper head crosspiece (70) of the subframe (1) and connected to the latter by first and second additional links (201, 202) of equal length which are rigidly connected to each other by reinforcing elements (203, 204) and, on the other hand, an additional vertical upright (212) fastened to the said additional upper crosspiece (211) and connected to the lower head crosspiece (63) by a third additional link (205) having the same length as the said first and second additional links (201, 202), in that the two side rods (111, 112) of the main connecting bar (3) are each articulated, on the one hand, to one end (03, 04) of the said additional upper crosspiece (211) and, on the other hand, to one end (01, 02) of the said front upper crosspiece (84), in that the articulated rigid linkage (14) is arranged between, on the one hand, a lower part (213) of the said additional vertical upright (212) and on the other hand, the lower part of the said lower vertical upright (81) and in that the main lifting cylinder (13) is articulated, on the one hand, to the lower part (213) of the said additional vertical upright (212) and, on the other hand, to the main brace (113) of the main connecting bar (3) in a part close to the said front upper crosspiece (84).

9. Bed according to Claim 8, characterized in that it comprises a weighing module comprising a weighing sensor (209) which is rigidly fixed by one of its ends (208) to the lower head crosspiece (63) and bears, by another end (207), on the lower face of a bearing piece (206) fastened to the said additional vertical upright (212).

10. Bed according to any one of Claims 1 to 9, characterized in that the head-and-shoulders board (27) and the lower-body and feet board (28) are made of a material transparent to X-rays and are arranged at a low height above the said front and rear upper crosspieces (84, 86) by leaving a free space with respect to the latter, allowing insertion of a radiography plate (121) arranged in a slide (122) which slides in fixed slideways (123, 124) which are mounted on downwardly bent-over vertical rims (127) of the said head/upper-body board (27), the slideways (123, 124) extending slightly beyond the articulation between the head/upper-body board (27) and the lower-body and feet board (28).

11. Bed according to any one of Claims 1 to 10, characterized in that the lower-body and feet board (28) comprises a foot board (28) proper, articulated by links (8) to the side ends of the said rear upper crosspiece (86), and a seat board (28') articulated with respect to the head/upper-body board (27) by links (9), the foot board (28) and the seat board (28') themselves being connected to each other by links (9'), and the front end of the foot board (28) being further connected by a vertical link (4') with respect to a central upper crosspiece (90) arranged in a plane which is common with that of the front and rear upper crosspieces (84, 86) of the main support (2) and connected to the main beam (82) by a central upright (89).

12. Bed according to any one of Claims 1 to 11, characterized in that the side rods (111, 112) of the main connecting bar (3) are articulated about transverse common spindles (131, 132).

## Patentansprüche

1. Medizinisches Bett in Modulform, mit
a) einem U-förmigen Gestell (1) mit zwei seitlichen Längsträgern (61, 62), die jeweils auf vorderen und hinteren, aufrechten, tragenden Füßen (65, 71; 66, 72) ruhen, mindestens einer unteren Kopftraverse (63), die die beiden seitlichen Längsträger (61, 62) zwischen den vorderen, aufrechten, tragenden Füßen (65, 66) verstrebt, und mindestens einer oberen Kopftraverse (70), die auf dem Gestell in einer festen, vorbestimmmten Höhe über der unteren Kopftraverse (63) angebracht ist,
b) einer freitragenden Hauptstütze (2), die einen Hauptträger (82) mit großem Querschnitt, der in Längsrichtung und axial angeordnet ist, eine untere, vertikale Strebe (81), die sich vom Hauptträger (82) nach unten erstreckt, wobei sie in der vorderen Hälfte des genannten Hauptträgers (82) angeordnet ist, mindestens zwei vertikale, vordere und hintere Tragestreben (83, 85), die sich von dem vorderen und hinteren Ende des Hauptträgers (82) nach oben erstrecken und mindestens obere, vordere und hintere Traversen (84, 86), die auf den genannten vorderen und hinteren, vertikalen Tragestreben (83, 85) ruhen, aufweist, wobei der Hauptträger (82) in der unteren Lage der Hauptstütze (2) zwischen den genannten seitlichen Längsträgern (61, 62) liegt,
c) einem Haupt-Zwischenglied (3), das zwei seitliche Stangen (111, 112), die jeweils einerseits in der Nähe des einen Endes (03, 04) der genannten oberen Kopftraverse (70) und andererseits an einem Ende (01, 02) der genannten oberen, vorderen Traverse (84) angelenkt sind, und mindestens einen Hauptsteg (113) aufweist, der die genannten beiden seitlichen Stangen (111, 112) verbindet,
d) einer starren, gelenkigen Verbindung (14), die zwischen einerseits einer Zone, die in der Nähe der genannten unteren Kopftraverse (63) gelegen ist, und andererseits dem unteren Abschnitt der genannten vertikalen, unteren Strebe (81) angeordnet ist,
e) einem Haupt-Hubzylinder (13), der axial angeordnet ist und einerseits in der Nähe der genannten unteren Kopftraverse (63) und andererseits auf dem Hauptsteg (113) des Haupt-Zwischengliedes (3) in einem Abschnitt angelenkt ist, der der genannten oberen, vorderen Traverse (84) naheliegt, um die genannte Hauptstütze (2) in Bezug auf das Gestell (1) in der Höhe zu versetzen,
f) einer Oberkörperplatte (27), die auf der genannten oberen, vorderen Traverse (84) mittels Schwingarmen (4) angebracht ist, die an den seitlichen Enden (05, 06) der genannten oberen, vorderen Traverse (84) angelenkt sind, und
g) einer Sitz- und Fußplatte (28), die einerseits auf der genannten oberen, hinteren Traverse (86) mittels Schwingarmen (8), die auf den seitlichen Enden der genannten oberen, hinteren Traverse (86) angelenkt sind, angebracht ist, und andererseits in Bezug auf die Oberkörperplatte (27) mit Hilfe von Schwingarmen (9) gelenkig angebracht ist.

2. Bett nach Anspruch 1, dadurch gekennzeichnet, daß die genannte starre, gelenkige Verbindung (14) durch einen einfachen Schwingarm gebildet ist, der einerseits in der Nähe der unteren Kopftraverse (63) und andererseits am unteren Abschnitt der genannten vertikalen, unteren Strebe (81) angelenkt ist.

3. Bett nach Anspruch 1, dadurch gekennzeichnet, daß die genannte starre, gelenkige Verbindung (14) von einem Vor- und Zurückneige-Zylinder (14) gebildet ist, der einerseits in Nähe der unteren Kopftraverse (63) und andererseits am unteren Abschnitt der genannten vertikalen, unteren Strebe (81) angelenkt ist, um wahlweise die Neigung der Hauptstütze (2) in Bezug auf die Horizontale zu ändern.

4. Bett nach irgendeinem der Ansprüche 1 bis 3, dadurch gekennzeichnet, daß der genannte Haupt-Hubzylinder (13) auf der unteren Kopftraverse (63) mittels eines vertikalen Schwingarms (115) angelenkt ist, der in der angehobenen Lage der Hauptstütze (2) auf der unteren Kopftraverse (63) aufsitzt und sich in der unteren Lage der Hauptstütze (2) von der genannten unteren Kopftraverse (63) lösen kann, um eine automatische Abkoppelung des Hauptzylinders (13) hervorzurufen, wenn die Hauptstütze (2) auf einer Stoppvorrichtung (105) zum Anschlag gebracht ist.

5. Bett nach irgendeinem der Ansprüche 1 bis 4, dadurch gekennzeichnet, daß es außerdem einen Zylinder (15) zum Anheben der Oberkörperplatte (27) aufweist, der in der Nähe des mittigen Abschnitts des Hauptträgerss (82) angeordnet ist und dessen eines Ende in der Nähe des genannten Hauptträgers (82) angelenkt ist, während das andere Ende auf einem Hebel (116) angelenkt ist, der mit Verbindungs-Schwingarmen (4) zwischen der oberen, vorderen Traverse (84) und der Oberkörperplatte (27) verbunden ist.

6. Bett nach Anspruch 5, dadurch gekennzeichnet, daß der Zylinder (15) zum Anheben der Oberkörperplatte (27) ein Ende, das an einem Entkoppelungs-Schwingarm (18) angelenkt ist, der seinerseits am genannten Hauptträger (82) angelenkt ist, sowie ein System aus einem Hebel (20) aufweist, der fest mit dem Ende des genannten Zylinders (15) verbunden ist und am Entkoppelungs-Schwingarm (18) angelenkt ist, und aus einem horizontalen Anschlag (117), der fest mit dem genannten Hauptträger (82) verbunden ist, um ein Absenken der Oberkörperplatte (27) im Falle einer Funktionsstörung des Zylinders (15) zum Anheben der Oberkörperplatte (27) zu gestatten.

7. Bett nach irgendeinem der Ansprüche 1 bis 6, dadurch gekennzeichnet, daß es außerdem ein entfernbares Wiegemodul (100) aufweist, das einerseits einen T-förmigen Zwischenrahmen aufweist, mit einem Querschenkel (101), der mit Zapfen (102, 102) versehen ist, die dazu bestimmt sind, in Öffnungen (07, 08) einzugreifen, die in einen ersten seitlichen Längsträger (61) eingebracht sind, um das Wiegemodul (100) in Bezug auf den genannten ersten Längsträger (61) zu tragen, sowie einem Hauptschenkel (104), der im wesentlichen senkrecht zum genannten Querschenkel (101) verläuft und eine Endplatte (105) aufweist, die mit einem Zapfen (106) ausgestattet, ist, der dazu bestimmt ist, in eine Öffnung (171) einzugreifen, die im zweiten seitlichen Längsträger (62) oder einer Platte (170) ausgebildet ist, die fest mit diesem Längsträger (62) verbunden ist, und andererseits eine entsprehende, eigentliche Wiegevorrichtung mit einem Wiege-Meßbalken (108), der parallel zum Hauptschenkel (104) des Zwischenrahmens ohne Berührung mit diesem angeordnet ist, wobei der Wiege-Meßbalken (08) in Bezug auf den Zwischenrahmen rund um eine horizontale Achse 011 angeordnet ist, die in der Nähe des Querschenkels (101) angeordnet ist, wobei der Wiege-Meßbalken (108) außerdem in seinem mittleren Abschnitt eine Auflagerolle (110) trägt, die um eine horizontale Achse 012 angebracht ist und dazu bestimmt ist, den Hauptträger (82) der Hauptstütze (2) aufzunehmen, die in der unteren Lage angeordnet ist, und wobei der Wiege-Meßbalken (108) mit seinem zweiten, freien Ende auf einem Ende (191) eines Biegemeßfühlers (192) aufsitzt, dessen anderes Ende (193) an einem Punkt 013 durch eine Schneidenlager (194) auf dem genannten Zwischenrahmen ruht, wobei die Berührungsachse oder -Zone 012, 013 im wesentlichen in derselben Ebene ausgerichtet sind.

8. Bett nach irgendeinem der Ansprüche 1 bis 3, dadurch gekennzeichnet, daß es außerdem ein zusätzliches Modul (200) aufweist, das zwischen der Hauptstütze (2) und der unteren und oberen Kopftraverse (63, 70) des Gestells (1) angeordnet ist, daß das genannte zusätzliche Modul (200) einerseits eine obere zusätzliche Traverse (211), die parallel zur oberen Kopftraverse (70) des Gestells (1) angebracht und mit dieser durch einen ersten und zweiten, zusätzlichen Schwingarm (201, 202) mit gleicher Länge verbunden ist, die starr miteinander durch Verstärkungselemente (203, 204) verbunden sind, und andererseits eine zusätzliche, vertikale Strebe (212) aufweist, die mit der genannten oberen, zusätzlichen Traverse (211) fest verbunden ist und mit der unteren Kopftraverse (63) durch einen dritten, zusätzlichen Schwingarm (205) mit derselben Länge wie der genannte erste und zweite, zusätzliche Schwingarm (201, 202) verbunden ist, daß die beiden seitlichen Stangen (111, 112) des Haupt-Zwischengliedes (3) jeweils einerseits an einem Ende (03, 04) der genannten oberen zusätzlichen Traverse (211) und andererseits an einem Ende (01, 02) der genannten oberen, vorderen Traverse (84) angelenkt sind, daß die starre, gelenkige Verbindung (14) zwischen einerseits einem unteren Abschnitt (213) der genannten vertikalen, zusätzlichen Strebe (212) und andererseits dem unteren Abschnitt der genannten vertikalen, unteren Strebe (81) angeordnet ist, und daß der Haupt-Hubzylinder (13) einerseits am unteren Abschnitt (213) der genannten vertikalen, zusätzlichen Strebe (212) und andererseits an dem Hauptsteg (113) des Haupt-Zwischengliedes (3) in einem Abschnitt angelenkt ist, der der genannten oberen, vorderen Traverse (84) naheliegt.

9. Bett nach Anspruch 8, dadurch gekennzeichnet, daß es ein Wiegemodul aufweist, das einen Gewichtsmeßfühler (209) aufweist, der starr mit dem einen seiner Enden (208) auf der unteren Kopftraverse (63) befestigt ist und mit dem anderen Ende (207) auf der unteren Fläche eines Anlagestücks (206) anliegt, das fest mit der genannten vertikalen, zusätzlichen Strebe (212) verbunden ist.

10. Bett nach irgendeinem der Ansprüche 1 bis 9, dadurch gekennzeichnet, daß die Oberkörperplatte (27) und die Sitz- und Fußplatte (28) aus einem für Roentgenstrahlen durchlässigen Material ausgebildet sind und in einer geringen Höhe über der genannten oberen, vorderen und hinteren Traverse (84, 86) angeordnet sind, wobei man in Bezug auf diese einen freien Raum ausspart, der die Einfürhung einer Roentgen-Aufnahmeplatte (121) gestattet, die in einer Schublade (122) angeordnet ist, die in festen Gleitführungen (123, 124) gleitet, die auf vertikalen, nach unten umgeschlagenen Rändern (127) der genannten Oberkörperplatte (27) angebracht sind, wobei sich die Gleitführungen (123, 124) ein wenig über die Gelenkverbindung zwischen der Oberkörperplatte (27) und der Sitz- und Fußplatte (28) hinaus verlängern.

11. Bett nach irgendeinem der Ansprüche 1 bis 10, dadurch gekennzeichnet, daß die Sitz- und Fußplatte (28) eine eigentliche Fußplatte (28), die durch Schwingarme (8) an den seitlichen Enden der genannten oberen, hinteren Traverse (86) angelenkt ist, und eine Sitzplatte (28'), die in Bezug auf die Oberkörperplatte (27) durch Schwingarme (9) gelenkig gelagert ist, aufweist, wobei die Fußplatte (28) und die Sitzplatte (28') ihrerseits miteinander durch Schwingarme (9') verbunden sind, und wobei das vordere Ende der Fußplatte (28) außerdem durch einen vertikalen Schwingarm (4') mit einer oberen, mittleren Traverse (90) verbunden ist, die in einer Ebene angeordet ist, die mit der der vorderen und hinteren, oberen Traverse (84, 86) der Hauptstütze (2) gemeinsam ist, und mit dem Hauptträger (82) durch eine mittlere Strebe (89) verbunden ist.

12. Bett nach irgendeinem der Ansprüche 1 bis 11, dadurch gekennzeichnet, daß die seitlichen Stangen (111, 112) des Haupt-Zwischengliedes (3) um gemeinsame, querverlaufende Achsen (131, 132) schwenkbar gelagert sind.
